# EUROPEAN PATENT SPECIFICATION

(11) **EP 4 332 028 B1**
(45) Date of publication and mention of the grant of the patent: **05.11.2025**
(21) Application number: 23193854.9
(22) Date of filing: 29.08.2023
(51) Int. Cl.: B65G 29/00, B65G 29/02, B65G 53/46, B65G 65/48

(54) **ROTARY FEEDER**
ROTIERENDER ZUFÜHRER
DISPOSITIF D'ALIMENTATION ROTATIF

(30) Priority: 05.09.2022 FI 20225773
(43) Date of publication of application: 06.03.2024
(73) Proprietor: Raumaster OY, 26100 Rauma (FI)
(72) Inventor: JUNNILA, Juha, 26720 Monnanummi (FI); KARI, Samuel, 26100 Rauma (FI)
(74) Representative: Berggren Oy

(56) References cited:
- DE-U- 1 869 987
- JP-A- H0 958 871
- JP-A- S5 090 057
- JP-U- H02 139 830
- US-A- 1 777 043

## Description

### Field of the invention

In general, the invention relates to rotary feeders for transferring bulk material from one space to another space.

### Background

In prior art, rotary feeders are used for transferring bulk material from one space to another, in many cases, for example, from a space under ambient pressure and/or temperature to another space which is pressurized and/or heated. The function of the rotary feeder is thus not only to transfer the material but also to prevent heat and/or pressure as well as possible gas/es in the second space from being transferred in material lines. These functions of the rotary feeder are enabled by a rotating rotor, a hollow housing structure, means for supplying air, and small structural clearances in the construction. Material is typically transferred by gravity and the rotation of the blades of the rotor. In a structure of prior art, a stationary pipe is arranged inside the rotor, the rotor rotating around the pipe. The pipe makes it possible to prevent material from freely discharging through the feeder. The stationary pipe prevents material to be transferred from accumulating in the inner parts of the blades of the rotating rotor. Warm air is arranged to be introduced in the pipe via its one end to prevent material to be transferred, such as ash, from adhering to the circumference of the pipe. The warm air to be introduced is arranged to be removed from below the pipe, whereby upon rotation of the rotor, the blade is free from material to be transferred, as well as from possible gases. The rotor is rotated at an end of a shaft by a drive, for example an electric motor and a reduction gear.

In utility model publication DE1869987U is disclosed a rotary feeder for transferring bulk material from a first space to a second space, the rotary feeder comprising a first rotary feeder end and a second rotary feeder end; a rotor comprising a first rotor end and a second rotor end; a shaft, on which only the second rotor end is mounted; a first bearing and a second bearing for supporting the shaft to be rotatable for rotating the rotor ends; a stationary inner pipe arranged around the shaft and inside the rotor; at least one inlet for introducing air between at least some rotating components of the rotary feeder and at least some stationary components of the rotary feeder, to form an air flow, which shaft of the rotary feeder is mounted, at one end, on a first bearing outside the first rotary feeder end and, at the second end, on a second bearing outside the second rotary feeder end.

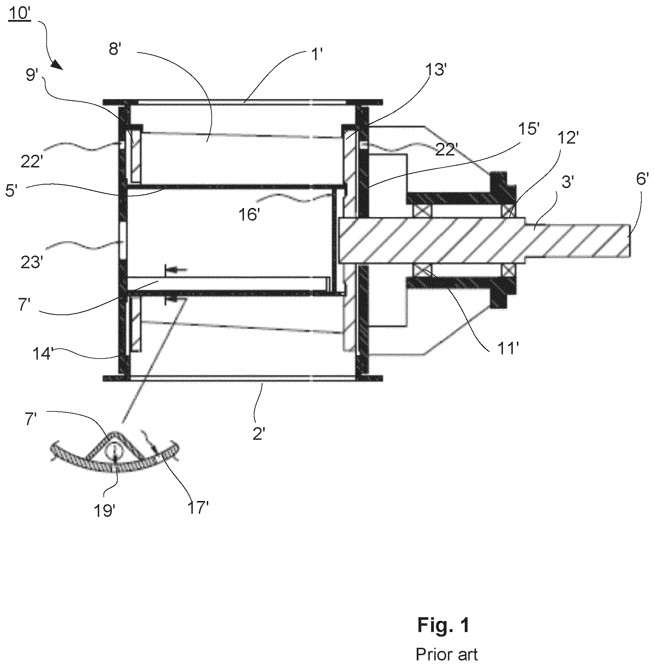

Figure 1 shows a schematic cross-sectional view of a rotary feeder 10' according to prior art, wherein bulk material is transferred from a first space 1' to a second space 2'. The rotary feeder 10' comprises a first rotary feeder end 14' and a second rotary feeder end 15' which constitute the side walls of a hollow housing structure and which are provided with a sealing air hole 22'. The rotary feeder 10' comprises a rotating rotor extending between a first rotor end 9' and a second rotor end 13' and provided with blades 8'. Inside the rotor, a stationary inner pipe 5' is arranged, around which the rotor rotates. The rotor is rotated by a drive, for example an electric motor and a reduction gear, at one end 6' of a shaft 3', the so-called drive end 6'. The stationary inner pipe 5' makes it possible to prevent material from freely discharging through the feeder and to prevent material to be transferred from remaining in the inner parts of the blades 8' of the rotating rotor. Warm air is arranged to be introduced in the inner pipe 5' via an inlet 23' formed by an opening at the second end, to be prevent material to be transferred, for example ash, from adhering to the circumference of the inner pipe 5'. The warm air to be introduced is arranged to be removed from below the inner pipe 5', wherein upon rotation of the rotor, the blade 8' is free from material to be transferred, as well as from possible gases. At the bottom of the inner pipe 5', the rotor comprises a reducing section 7' for removing air. The reducing section 7' comprises a first and a second outlet 17', 19'. Furthermore, the rotor structure comprises a spacer plate 16'. The inner pipe 5' and the warm air introduced in it make it possible that the rotary feeder 10' is clean and works according to calculated capacities. The blades 8' of the rotor are mounted on the shaft 3' at only the second rotor end 13', because the stationary protruding inner pipe 5' requires the mounting of the first rotor end 9', to remain stationary. As a result, the shaft 3' does not extend through the rotary feeder 10' but ends at the second rotor end 13' of the rotor frame where the mounting of the blades 8' begins, wherein the protruding shaft 3' is mounted on two bearings, a first bearing 11' and a second bearing 12', at one end 6' only, on the side of the drive. Because the rotor shaft 3' is mounted on bearings at only one rotor end 13', it requires very laborious alignment, to be functional. If the alignment of the rotor fails, the rotor may seize, whereby the operation of the rotary feeder is interrupted, or the rotary feeder is even broken completely. In solutions of prior art, attempts have been made to prevent the risk of seizing of the rotor by reducing the clearances of the bearings and the tolerances of the components to improve precision of the alignment; as a result, however, the manufacture of the rotary feeder and its spare parts has become more difficult and time consuming. Furthermore, the alignment of the rotor has required particularly close monitoring during the installation.

It is an aim of the invention to provide a rotary feeder by which the above presented problems relating to prior art can be eliminated or at least minimized.

In particular, it is thus aim of the invention to provide an improved rotary feeder in which the above described drawbacks are eliminated or at least minimized.

### Summary

For achieving the aims presented above and those emerging later on, the rotary feeder as defined in claim 1 is provided.

Preferred embodiments and further features are presented in the dependent claims.

The rotary feeder according to the invention, for transferring bulk material from a first space to a second space, comprises
- a first rotary feeder and and a second rotary feeder end;
- a rotor comprising a first rotor end and a second rotor end;
- blades for transferring bulk material, the blades being mounted on the rotor ends;
- a shaft on which only the second rotor end is mounted;
- a first bearing and a second bearing for supporting the shaft to be rotatable for rotating the rotor ends and the blades;
- a stationary inner pipe arranged around the shaft and inside the rotor;
- at least one inlet for introducing air between at least some rotating components of the rotary feeder and at least some stationary components of the rotary feeder, for forming an air flow;
wherein the shaft of the rotary feeder is mounted, at one end, on a first bearing outside the first rotary feeder end and, at the other end, on a second bearing outside the second rotary feeder end.

A rotary feeder according to another preferred feature of the invention further comprises a stationary liner pipe arranged inside the inner pipe, the shaft extending through the liner pipe.

A rotary feeder according to another preferred feature of the invention further comprises a spacer plate, wherein one end of the liner pipe is fastened to the first rotary feeder end, and the other end of the liner pipe is fastened by means of the spacer plate to the inner pipe, and an air space is provided between the inner pipe and the liner pipe so that the outer surface of the liner pipe and the inner surface of the inner pipe are spaced from each other.

According to another preferred feature of the invention, warm air is configured to be introduced in the air space between the inner pipe and the liner pipe via at least one inlet for introducing air between at least some rotating components of the rotary feeder and at least some stationary components of the rotary feeder, for forming an air flow.

According to the invention, the rotary feeder comprises a reducing section arranged in the inner pipe and comprising first outlets and second outlets, wherein the reducing section is configured to control the air flow between at least some rotating components of the rotary feeder and at least some stationary components of the rotary feeder, and wherein part of the air flow is configured to exit via the first outlets, and part of the air flow via the second outlets.

According to another preferred feature of the invention, the rotary feeder comprises a sealing air hole arranged between the shaft and the liner pipe, for sealing the space between the inner pipe and the rotor end of the rotor.

According to another preferred feature of the invention, the rotary feeder comprises a second inlet provided at the first rotary feeder end.

According to another preferred feature of the invention, the rotary feeder comprises second sealing air holes which are arranged at the rotary feeder ends and via which sealing air is configured to be introduced between the rotary feeder ends and the rotor ends of the rotor.

According to another preferred feature of the invention, the rotating components of the rotary feeder comprise the shaft, the blades, and the rotor ends, and the stationary components of the rotary feeder comprise the liner pipe, the inner pipe, the reducing section, and the rotary feeder ends.

The rotary feeder according to the invention provides the advantages of the above-described rotary feeder representing prior art, and simultaneously, improved and easier manufacture, operation and replacement of spare parts are achieved, compared with solutions of prior art. The function of the rotary feeder remains the same, but contrary to the solutions of prior art, the novel and inventive structure of the rotary feeder according to the invention makes it possible to mount the shaft on bearings on both sides of the rotary feeder, whereby the shaft of the rotor can be aligned in a straightforward and precise way. Now, it has been surprisingly found how the shaft can be arranged to extend through the rotary feeder and mounted on bearings on both sides of the rotary feeder without compromising the tightness of the rotary feeder. In this way, a tight rotary feeder has been provided, in which the alignment of the shaft is smooth and does not require extra special precision.

In solutions of prior art, warm air was introduced in the inner pipe via an inlet arranged at the end of the rotary feeder, which inlet was located at the centre of one rotary feeder end, whereby air was introduced in the inner pipe directly via one inlet located at one end of the rotary feeder. In the rotary feeder according to the invention, an inlet for warm air is preferably arranged at one rotary feeder end, on the side opposite to the outlets of the inner pipe, whereby the air will flow through the whole inner pipe. Thus, the inner pipe can be made uniformly warm throughout. According to the invention, a liner pipe is provided inside the inner pipe, wherein the shaft is configured to extend through the liner pipe so that tightness is secured as the liner pipe blocks the air channels via which air could otherwise escape. Preferably, the liner pipe is provided with a hole allowing the flow of air to seal the opposite end of the inner pipe, i.e. the rotor end at which the rotor rotates.

The shape of the liner pipe can be freely selected to be suitable with respect to the inner diameter of the inner pipe, the outer diameter of the shaft, and the space required for the passage of air. Preferably, the cross-section of the liner pipe is circular. Preferably, the tightness of the liner pipe is secured by fastening it by welding and/or by means of a tight fitting to the inner pipe and the rotary feeder end of the rotary feeder.

According to another preferred aspect of the invention, the rotary feeder is configured to transfer bulk material by the blades of the rotor from a first space to a second space. The blades are fastened to the rotor ends of the rotor, that is, the first rotor end and the second rotor end. Only one of the rotor ends is mounted on the shaft rotating the rotor. In the rotary feeder, air is configured to be introduced in a space between at least some of the rotating components, for example the shaft, the blades, the rotor end, and at least some of the stationary components, for example the liner pipe, the inner pipe, the reducing section, the rotary feeder end, via the stationary inner pipe inside the rotor. The shaft of the rotary feeder is mounted on bearings at its both ends outside the rotary feeder ends of the rotary feeder.

According to another preferred aspect of the invention, a first stationary inner pipe and a second stationary liner pipe are fastened to one rotary feeder end of the rotary feeder, and in the rotary feeder, air is configured to be introduced via a space between at least the first stationary inner pipe and the second stationary liner pipe into a space between at least some stationary components, for example the liner pipe, the inner pipe, the reducing section, the rotary feeder end.

According to another preferred aspect of the invention, introduction of air into the space between the stationary liner pipe and the stationary inner pipe of the rotary feeder takes place from one rotary feeder end of the rotary feeder.

According to another preferred aspect of the invention, a liner pipe is arranged inside the inner pipe of the rotary feeder and configured to constitute an element providing tightness, configured to provide tightness and air circulation.

The rotary feeder according to the invention and its preferred features provide a number of advantages:
- minimal adherence of material being transferred to the rotary feeder;
- secure and sealed flow of warm air within the rotary feeder;
- reduced costs and time for manufacturing the rotary feeder;
- easier assembly and installation;
- easier replacement of spare parts;
- better resistance to forces exerted from the material to be transferred;
- minimization, partly even elimination, of wear and breakage of structures;
- reduced energy consumption.

### Brief description of the drawings

In the following, the invention will be described in more detail with reference to the figures of the appended drawing; however, the invention is by no means intended to be restricted to the details of the figures.
Figure 1 shows, in a schematic partial cross-sectional view, a preferred embodiment of a rotary feeder according to prior art,
Fig. 2 shows, in a schematic partial cross-sectional view, a preferred embodiment of a rotary feeder according to the invention, seen from the side, and
Fig. 3 shows the embodiment of Fig. 2 in a schematic partial cross-section view from the end.

### Detailed description

In the following description, the same reference numbers and symbols will be used to identify corresponding elements according to different aspects depicting the invention and its preferred features. In the figures, some recurrent reference symbols may have been omitted for clarity.

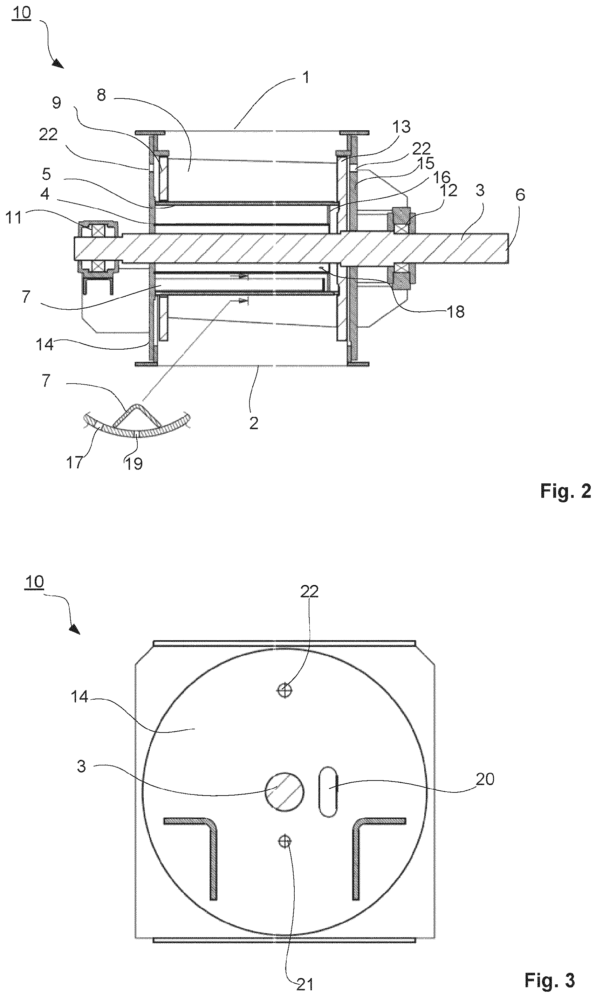

In the example shown in Figs. 2 to 3, a rotary feeder 10 receives material from a first space 1, for example a channel 1, and removes it from the rotary feeder 10 to a second space 2, for example a channel 2. The transfer of material is configured to be implemented by means of blades 8. The blades 8 are fastened to rotor ends 9, 13 of a rotor. The first rotor end 13 of the rotor is mounted on a shaft 3 at the rotary feeder end 15 on the side of the drive of the rotor, preferably by welding. The shaft 3 is supported via a first bearing 11 and a second bearing 12, the first and second bearings 11, 12 being arranged on opposite sides of the rotary feeder 10, outside the rotary feeder ends 14, 15. The blades 8 and the rotor ends 9, 13 of the rotor are spaced from the inner pipe 5 so that they are not in contact with the inner pipe 5 but a small clearance is provided between the inner pipe 5 and the blades 8 and, similarly, between the inner pipe 5 and the rotor ends. The inner pipe 5 is stationary and nonrotating, and thereby the clearance between the blades 8 rotating along with the rotor and the similarly rotating rotor ends 9, 13 prevents a contact between these. The rotor ends 9, 13 of the rotor are also spaced from the rotary feeder ends 14, 15 of the rotary feeder, to prevent the rotor ends 9, 13 from contacting the rotary feeder ends 14, 15 of the rotary feeder 10. A liner pipe 4 is provided inside the inner pipe 5 and fixed at one end to the first rotary feeder 14, preferably by means of an adapter or by welding. The liner pipe 4 is stationary as well. The other end of the liner pipe 4 is fixed, preferably welded, by means of a spacer plate 16 to the inner pipe 5. An air space is provided between the inner pipe 5 and the liner pipe 4; in other words, the outer surface of the liner pipe 4 and the inner surface of the inner pipe 5 are spaced from each other. Warm air is configured to be introduced in the air space between the inner pipe 5 and the liner pipe 4 via a first inlet 20, the first inlet 20 being arranged at one end, namely the first rotary feeder end 14, of the rotary feeder 10. The rotary feeder 10 comprises a reducing section 7 arranged in the inner pipe 5. Incoming warm air flows through the inner pipe 5 while the reducing section 7 controls the air flow so that it will not flow directly to outlets 17. Most of the air will finally exit via the outlets 17, whereby the blades 8 are cleared from material to be transferred and from gases before the blade 8 rotates into the first space 1, for example the channel 1. The rest of the air, i.e. the air that does not exit via the outlets 17, will flow via a first sealing air hole 18 to the space between the shaft 3 and the liner pipe 4, to seal the space between the inner pipe 5 and the rotor end 13 of the rotor. Another air flow is introduced in the reducing section 7 via a second inlet 21 at the rotary feeder end 14, this air flow exiting via outlets 19, whereby the space between the blades 8 and the inner pipe 5 can be cleaned. Further, the rotary feeder ends 14, 15 are provided with second sealing air holes 22 for introducing sealing air in the space between the rotary feeder ends 14, 15 and the rotor ends 9, 13 of the rotor. Mounted on the first and second bearings 11, 12 in the rotary feeder 10, it is not the first rotor end 9 that is connected to the shaft 3 but only the second rotor end 13 of the rotor is mounted on the shaft 3. The first bearing 11 is connected from the outside of the first rotary feeder end 14, and the second bearing 12 is connected from the outside of the second rotary feeder end 15.

In the rotary feeder 10, the introduction of warm air is thus preferably arranged at one rotary feeder end 14, on the side opposite to the outlets 17, 19 of the inner pipe 5, whereby the air will flow through the whole inner pipe 5. In this way, the inner pipe 5 can be made uniformly warm throughout. The liner pipe 4 arranged inside the inner pipe 5 makes it possible for the shaft 3 to extend through the inner pipe 5 so that tightness is secured as the liner pipe 4 closes the air channels via which air could otherwise escape. Preferably, the liner pipe 4 is provided with a hole/holes allowing the flow of air to seal the opposite end 15 of the inner pipe 5, i.e. the rotor end 15 where the rotor rotates. The shape of the liner pipe 4 can be freely selected to be suitable in view of the inner diameter of the inner pipe 5, the outer diameter of the shaft 3, and the space required for the passage of air. Preferably, the cross section of the liner pipe 4 is circular. Preferably, the tightness of the liner pipe 4 is secured by connecting it, by welding and/or by means of a tight fit, to the inner pipe 5 and the rotary feeder end 14 of the rotary feeder 10.

The rotary feeder 10 is configured to transfer bulk material by means of the rotor blades 8 from the first space 1 to the second space 2. The blades 8 are connected to the rotor ends 9, 13 of the rotor, i.e. the first rotor end 9 and the second rotor end 13. Only one rotor end 13 of the rotor ends 9, 13 is mounted on the shaft 3 that rotates the rotor. Consequently, in the rotary feeder 10, air is configured to be introduced in the space between at least some rotating components, for example the shaft 3, the blades 8, the rotor end 12, 13, and at least some stationary components, for example the liner pipe 4, the inner pipe 5, the reducing section 7, the rotary feeder end 14, 15, via at least the stationary inner pipe 5 inside the rotor. The shaft 3 of the rotary feeder 10 is mounted on bearings 11, 12 at both ends outside the rotary feeder ends 14, 15 of the rotary feeder 10. A stationary inner pipe 5 and a stationary liner pipe 4 inside the same are connected to one rotary feeder end of the rotary feeder 10, wherein air is configured to be introduced via at least the space between the stationary inner pipe 5 and the stationary liner pipe 4 into the space between at least some rotating components, for example the shaft 3, the blades 8, the rotor end 9, 13; and at least some stationary components, for example the liner pipe 4, the inner pipe 5, the reducing section 7, the rotary feeder end 14, 15 in the rotary feeder. Air is supplied into the space between the stationary liner pipe 4 and the inner pipe 5 in the rotary feeder 10 from one rotary feeder end 14 of the rotary feeder 10. The liner pipe 4 arranged within the inner pipe 5 of the rotary feeder 10 is thus configured to provide the sealing.

Although, in the description above, some functions and details were presented with reference to certain features and examples only, these functions can also be implemented in connection with other features and examples, irrespective of whether this was mentioned or not. Although some features were described with reference to certain examples only, these features may be included in other examples, irrespective of whether this was mentioned or not.

Only certain preferred embodiments of the invention were described above; the invention should not be limited narrowly to these but a number of changes and modifications are possible within the scope defined in the following claims.

### Reference symbols used in the drawing

- 1, 1': first space
- 2, 2': second space
- 3, 3': shaft
- 4: liner pipe
- 5, 5': inner pipe
- 6, 6': shaft end on the drive side
- 7, 7': reducing section
- 8, 8': blade
- 9, 9': first rotor end
- 10, 10': rotary feeder
- 11, 11': first bearing
- 12, 12': second bearing
- 13, 13': second rotor end
- 14, 14': first rotary feeder end
- 15, 15': second rotary feeder end
- 16, 16': spacer plate
- 17, 17': first outlet
- 18: sealing air hole in the liner pipe
- 19, 19': second outlet
- 20: first inlet
- 21: second inlet
- 22, 22': sealing air hole at the end of the rotary feeder
- 23': inlet

## Claims

1. A rotary feeder (10) for transferring bulk material from a first space (1) to a second space (2), the rotary feeder (10) comprising
- a first rotary feeder end (14) and a second rotary feeder end (15);
- a rotor comprising a first rotor end (9) and a second rotor end (13);
- blades (8) for transferring bulk material, the blades (8) being connected to rotor ends (9, 13);
- a shaft (3), on which only the second rotor end (13) is mounted;
- a first bearing (11) and a second bearing (12) for supporting the shaft (3) to be rotatable for rotating the rotor ends (9, 13) and the blades (8);
- a stationary inner pipe (5) arranged around the shaft (3) and inside the rotor;
- at least one inlet (20) for introducing air between at least some rotating components of the rotary feeder and at least some stationary components of the rotary feeder, to form an air flow,
- which shaft (3) of the rotary feeder (10) is mounted, at one end, on a first bearing (11) outside the first rotary feeder end (14) and, at the second end, on a second bearing (12) outside the second rotary feeder end (15),
wherein
the rotary feeder (10) comprises a reducing section (7) arranged in the inner pipe (5) and provided with first outlets (17) and second outlets (19), wherein the reducing section (7) is configured to control the air flow between at least some rotating components of the rotary feeder and at least some stationary components of the rotary feeder; and wherein part of the air flow is configured to exit via the first outlets (17), and another part of the air flow is configured to exit via the second outlets (19).

2. The rotary feeder according to claim 1, **characterized in that** the rotary feeder (10) further comprises a stationary liner pipe (4) arranged inside the inner pipe (5), wherein the shaft (3) extends through the liner pipe (4).

3. The rotary feeder according to claim 2, **characterized in that** the rotary feeder (10) comprises a sealing air hole (18) arranged between the shaft (3) and the liner pipe (4), for sealing the space between the inner pipe (5) and the rotor end (13) of the rotor.

4. The rotary feeder according to claim 2 or 3, **characterized in that** the rotary feeder (10) comprises a second inlet (21) arranged at the first rotary feeder end (14).

5. The rotary feeder according to any of the claims 2-4, **characterized in that** the rotating components of the rotary feeder (10) comprise the shaft (3), the blades (8), and the rotor ends (9, 13); and that the stationary components of the rotary feeder comprise the liner pipe (4), the inner pipe (5), the reducing section (7), and the rotary feeder ends (14, 15).

## Patentansprüche

1. Drehförderer (10) zum Transferieren von Schüttmaterial von einem ersten Raum (1) zu einem zweiten Raum (2), der Drehförderer (10) umfassend:
- ein erstes Drehfördererende (14) und ein zweites Drehfördererende (15);
- einen Rotor, umfassend ein erstes Rotorende (9) und ein zweites Rotorende (13);
- Lamellen (8) zum Transferieren von Schüttmaterial, wobei die Lamellen (8) mit Rotorenden (9, 13) verbunden sind;
- eine Welle (3), an der nur das zweite Rotorende (13) befestigt ist;
- ein erstes Lager (11) und ein zweites Lager (12) zur Unterstützung der Welle (3), damit diese drehbar ist, um die Rotorenden (9, 13) und die Lamellen (8) zu drehen;
- ein stationäres Innenrohr (5), das um die Welle (3) herum und im Inneren des Rotors angeordnet ist;
- mindestens einen Einlass (20) zum Einleiten von Luft zwischen mindestens einigen drehenden Komponenten des Drehförderers und mindestens einigen stationären Komponenten des Drehförderers, um einen Luftstrom zu bilden,
- wobei die Welle (3) des Drehförderers (10) an einem Ende an einem ersten Lager (11) außerhalb des ersten Drehfördererendes (14) und am zweiten Ende an einem zweiten Lager (12) außerhalb des zweiten Drehfördererendes (15) befestigt ist, wobei der Drehförderer (10) einen reduzierenden Abschnitt (7) umfasst, der in dem Innenrohr (5) angeordnet und mit ersten Auslässen (17) und zweiten Auslässen (19) bereitgestellt ist, wobei der reduzierende Abschnitt (7) konfiguriert ist, um den Luftstrom zwischen mindestens einigen drehenden Komponenten des Drehförderers und mindestens einigen stationären Komponenten des Drehförderers zu steuern; und wobei ein Teil des Luftstroms konfiguriert ist, um über die ersten Auslässe (17) auszutreten, und ein anderer Teil des Luftstroms konfiguriert ist, um über die zweiten Auslässe (19) auszutreten.

2. Drehförderer nach Anspruch 1, **dadurch gekennzeichnet, dass** der Drehförderer (10) ferner ein stationäres Auskleidungsrohr (4) umfasst, das innerhalb des Innenrohrs (5) angeordnet ist, wobei sich die Welle (3) durch das Auskleidungsrohr (4) erstreckt.

3. Drehförderer nach Anspruch 2, **dadurch gekennzeichnet, dass** der Drehförderer (10) ein Dichtungsluftloch (18) umfasst, das zwischen der Welle (3) und dem Auskleidungsrohr (4) angeordnet ist, um den Raum zwischen dem Innenrohr (5) und dem Rotorende (13) des Rotors abzudichten.

4. Drehförderer nach Anspruch 2 oder 3, **dadurch gekennzeichnet, dass** der Drehförderer (10) einen zweiten Einlass (21) umfasst, der an dem ersten Drehfördererende (14) angeordnet ist.

5. Drehförderer nach einem der Ansprüche 2 bis 4, **dadurch gekennzeichnet, dass** die drehenden Komponenten des Drehförderers (10) die Welle (3), die Lamellen (8) und die Rotorenden (9, 13) umfassen; und dass die stationären Komponenten des Drehförderers das Auskleidungsrohr (4), das Innenrohr (5), den reduzierenden Abschnitt (7) und die Drehfördererenden (14, 15) umfassen.

## Revendications

1. Dispositif d'alimentation rotatif (10) permettant le transfert de matériaux en vrac depuis un premier espace (1) vers un second espace (2), le dispositif d'alimentation rotatif (10) comprenant
- une première extrémité de dispositif d'alimentation rotatif (14) et une seconde extrémité de dispositif d'alimentation rotatif (15) ;
- un rotor comprenant une première extrémité de rotor (9) et une seconde extrémité de rotor (13) ;
- des pales (8) permettant le transfert de matériaux en vrac, les pales (8) étant reliées aux extrémités de rotor (9, 13) ;
- un arbre (3), sur lequel seule la seconde extrémité de rotor (13) est montée :
- un premier palier (11) et un second palier (12) permettant de soutenir l'arbre (3) en rotation pour faire tourner les extrémités de rotor (9, 13) et les pales (8) ;
- un tube intérieur fixe (5) agencé autour de l'arbre (3) et à l'intérieur du rotor ;
- au moins une entrée (20) permettant l'introduction d'air entre au moins certains composants rotatifs du dispositif d'alimentation rotatif et au moins certains composants fixes du dispositif d'alimentation rotatif, pour former un écoulement d'air,
- lequel arbre (3) du dispositif d'alimentation rotatif (10) est monté, au niveau d'une extrémité, sur un premier palier (11) à l'extérieur de la première extrémité de dispositif d'alimentation rotatif (14) et, au niveau de la seconde extrémité, sur un second palier (12) à l'extérieur de la seconde extrémité de dispositif d'alimentation rotatif (15), dans lequel le dispositif d'alimentation rotatif (10) comprend une section de réduction (7) agencée dans le tube intérieur (5) et pourvue de premières sorties (17) et de secondes sorties (19), dans lequel la section de réduction (7) est configurée pour commander l'écoulement d'air entre au moins certains composants rotatifs du dispositif d'alimentation rotatif et au moins certains composants fixes du dispositif d'alimentation rotatif ; et une partie de l'écoulement d'air est configurée pour sortir par les premières sorties (17), et une autre partie de l'écoulement d'air est configurée pour sortir par les secondes sorties (19).

2. Dispositif d'alimentation rotatif selon la revendication 1, **caractérisé en ce que** le dispositif d'alimentation rotatif (10) comprend également un tube de chemisage fixe (4) agencé à l'intérieur du tube intérieur (5), dans lequel l'arbre (3) s'étend à travers le tube de chemisage (4).

3. Dispositif d'alimentation rotatif selon la revendication 2, **caractérisé en ce que** le dispositif d'alimentation rotatif (10) comprend un orifice d'air d'étanchéité (18) agencé entre l'arbre (3) et le tube de chemisage (4), pour assurer l'étanchéité entre le tube intérieur (5) et l'extrémité de rotor (13) du rotor.

4. Dispositif d'alimentation rotatif selon la revendication 2 ou 3, **caractérisé en ce que** le dispositif d'alimentation rotatif (10) comprend une seconde entrée (21) agencée au niveau de la première extrémité de dispositif d'alimentation rotatif (14).

5. Dispositif d'alimentation rotatif selon l'une quelconque des revendications 2 à 4, **caractérisé en ce que** les composants rotatifs du dispositif d'alimentation rotatif (10) comprennent l'arbre (3), les pales (8) et les extrémités de rotor (9, 13) ; et **en ce que** les composants fixes du dispositif d'alimentation rotatif comprennent le tube de chemisage (4), le tube intérieur (5), la section de réduction (7) et les extrémités de dispositif d'alimentation rotatif (14, 15).
